# EUROPÄISCHE PATENTSCHRIFT

(11) **EP 2 620 051 B1**
(45) Veröffentlichungstag und Bekanntmachung des Hinweises auf die Patenterteilung: **31.08.2016**
(21) Anmeldenummer: 12195773.2
(22) Anmeldetag: 06.12.2012
(51) Int. Cl.: A01D 43/14, A01F 15/08

(54) **Verfahren zur Aufbereitung von landwirtschaftlichem Erntegut und landwirtschaftliche Erntemaschine**
Method for processing agricultural crops and agricultural harvester
Procédé de préparation de récolte agricole et moissonneuse agricole

(30) Priorität: 25.01.2012 DE 102012100605
(43) Veröffentlichungstag der Anmeldung: 31.07.2013
(73) Patentinhaber: CLAAS Selbstfahrende Erntemaschinen GmbH, 33428 Harsewinkel (DE)
(72) Erfinder: Kirchbeck, Alexander, 48149 Münster (DE); Grothe, Dominik, 37671 Höxter (DE)

(56) Entgegenhaltungen:
- EP-A1- 1 518 453
- EP-A1- 1 935 230
- DE-A1- 3 232 746
- DE-A1- 4 106 637
- DE-A1-102009 002 102
- US-B1- 7 743 699

## Beschreibung

Die Erfindung betrifft ein Verfahren zur Aufbereitung von landwirtschaftlichem Erntegut gemäß dem Oberbegriff des Patentanspruchs 1. Daneben betrifft die Erfindung einen selbstfahrenden Feldhäcksler gemäß dem Oberbegriff des Anspruchs 8.

Ein derartiger Verfahren und ein derartiger Feldhäcksler sind aus DE-A-102009002102 bekannt.

In der landwirtschaftlichen Erntetechnik zählt die Applikation von in Wasser gelösten Siliermitteln, von Konzentratmitteln oder von Granulaten zum Erntegut zu üblichen Verfahren der Aufbereitung bzw. Behandlung von Erntegut. Aus dem Stand der Technik sind beispielsweise Ladewagen, Ballenpressen oder selbstfahrende Feldhäcksler bekannt, bei denen dem jeweils in Form eines Gutstroms durch ein Arbeitsaggregat geförderten Erntegut derartige Hilfsmittel kontinuierlich zugegeben werden, um allgemein die Qualität des Ernteguts - insbesondere den späteren Silageprozess - zu begünstigen. Konkret können mit der Zugabe sogenannter Silierhilfsmittel verschiedene der nachfolgenden Wirkungen angestrebt werden: verbesserte Vergärung des Ernteguts; Erhöhung der Haltbarkeit unter Lufteinfluss; Reduzierung des Grassaftablaufs; Verbesserung bei der späteren Verfütterung hinsichtlich der Futteraufnahme, Verdaulichkeit, Mast- und Milchleistung; Verhinderung von Cloristridien. Je nach verfolgtem Zweck ist der Einsatz unterschiedlicher Siliermittel bekannt, beispielsweise der Einsatz von Säuren (z.B. Milchsäure) oder von zuckerhaltigen Flüssigkeiten (z.B. Melasse). Bekanntermaßen erfolgt die Dosierung des Hilfsmittels im einfachen Fall beispielsweise zeitabhängig, d.h. mit einer vorgebbaren Zugabemenge zum Erntegutstrom pro Zeit. Ein demgegenüber wirtschaftlicherer Einsatz des Hilfsmittels wird in der Praxis durch eine Zugabe unter Berücksichtigung des aktuellen Erntegutdurchsatzes der Erntemaschine erreicht, wodurch zumindest während Unterbrechungen der Erntegutförderung (beispielsweise beim Wenden am Feldende, bei Lücken im Erntebestand oder bei Stillstand der Gutförderung) nicht unnötig Hilfsmittel verbraucht wird. Darüber hinaus erfordert die richtige Dosierung des Hilfsmittels hohe Sachkenntnis des Maschinenbedieners über die Beschaffenheit des Ernteguts, um das Hilfsmittel in angemessener, d.h. für dessen Wirksamkeit erforderlicher, jedoch nicht unnötig höherer Menge zuzugeben. Da sich der Zustand des zu erntenden Pflanzenbestands in der Praxis lokal deutlich voneinander unterscheiden kann (beispielsweise aufgrund von anderen Bodenverhältnissen, anderen Lichtverhältnissen, Bodenneigung etc.), ist eine optimale Dosierung des Hilfsmittels kaum möglich. Insbesondere unerfahrene Bediener sind mit dieser Aufgabe überfordert.

Der vorliegenden Erfindung liegt die Aufgabe zugrunde, ein Verfahren zur Aufbereitung von Erntegut gemäß der eingangs beschriebenen Art anzugeben, welches einen gegenüber bekannten Verfahren effektiveren Einsatz von Hilfsmitteln, insbesondere von Silierhilfsmitteln, ermöglicht, um damit unter möglichst wirtschaftlichem Ressourceneinsatz eine zuverlässig hohe Qualität des geernteten Gutes zu gewährleisten. Weiterhin soll ein diesem Zweck dienende selbstfahrender Feldhäcksler angegeben werden.

Die genannte Aufgabe wird gelöst durch ein Verfahren gemäß dem Anspruch 1. Dieses zeichnet sich dadurch aus, dass eine oder mehrere Eigenschaften des Ernteguts sensorisch erfasst werden, um die Zugabemenge des zumindest einen Hilfsmittels in Abhängigkeit erfasster Guteigenschaften zu dosieren.

Erfindungsgemäß ist demnach vorgesehen, dass bei der Dosierung des zumindest einen Hilfsmittels eine oder mehrere Eigenschaften des Ernteguts berücksichtigt werden. Dazu werden auf vorteilhafte Weise Eigenschaften des durch die Erntemaschine geförderten Ernteguts laufend sensorisch überwacht, so dass die Zugabemenge unmittelbar - und damit besonders bedarfsgerecht - angepasst wird. So erfolgt auf vorteilhafte Weise eine automatische Steuerung der Hilfsmittelzugabe, was den Bediener der Erntemaschine von einer weiteren Überwachung entlastet. Der Einsatz des bzw. der Hilfsmittel ist durch die bedarfsgerechte Dosierung besonders effektiv und damit wirtschaftlich. Die zuvor genannte Aufgabe wird damit gelöst.

Die sensorische Erfassung einer oder mehrere Eigenschaften des Ernteguts kann technisch auf unterschiedliche Weise erfolgen. Vorteilhafterweise können dabei Eigenschaften wie Erntegutart, Feuchtigkeit, Trockenmasse, Temperatur, Struktur, Schnittlänge, stoffliche Zusammensetzung (Inhaltsbestandteile bzw. -stoffe) oder sonstige Merkmale des Ernteguts erfasst werden, die für die Dosierung von Hilfsmitteln jeglicher Art von Bedeutung sein können. Da in der Regel insbesondere die stoffliche Zusammensetzung des Ernteguts eine wichtige Rolle für die Dosierung spielt, werden gemäß einer vorteilhaften Weiterbildung der Erfindung einzelne Inhaltsbestandteile und/oder - stoffe des Ernteguts insbesondere auf Basis einer optischen, bevorzugt einer nahinfrarotspektroskopischen Analyse ermittelt. Eine optische Analyse könnte beispielsweise mit geeigneter Kameratechnik durch optische Überwachung des Gutstroms und anschließende elektronische Auswertung aufgenommener Bilder erfolgen. Besonders bevorzugt erfolgt die Inhaltsbestimmung auf Basis einer nahinfrarotspektroskopischen Analyse (NIR-Technologie), da sich hiermit eine hohe Anzahl für eine Siliermittelzugabe relevanter Inhaltsbestandteile des Ernteguts wie unter anderem Zuckergehalt, Proteingehalt, Rohascheanteil, Rohfaseranteil schnell und zuverlässig ermitteln lassen.

Es ist denkbar, unterschiedliche Messverfahren miteinander zu kombinieren, um beispielsweise verschiedene Eigenschaften des Ernteguts auf sensorisch unterschiedliche Weise zu erfassen. Beispielsweise könnten zur Ermittlung der Feuchte und/oder der Temperatur des Ernteguts - zusätzlich zu einem optischen Messverfahren zur Erfassung von Inhaltsstoffen des Ernteguts - separate Messwege vorgesehen sein.

Zur Gewährleistung eines wirtschaftlichen Einsatzes des zumindest einen Hilfsmittels erfolgt vorteilhaft dessen Dosierung - neben der Berücksichtigung von Eigenschaften des Ernteguts - zusätzlich in Abhängigkeit der Zeit und/oder des Erntegutdurchsatzes durch die Erntemaschine. Durch Berücksichtigung des Durchsatzes kann schnell auf Schwankungen der Erntegutmenge reagiert werden bzw. kann bei ausbleibender Förderung die Zugabe des zumindest einen Hilfsmittels völlig unterbrochen werden. Für die Ermittlung des Erntegutdurchsatzes kann in der Maschine vorhandene Sensorik oder ein separater Durchsatzsensor genutzt werden.

Das erfindungsgemäße Verfahren erzielt bereits für die Dosierung nur eines Hilfsmittels vorteilhafte Effekte. Gemäß einer vorteilhaften Weiterbildung des Verfahrens sind dem Erntegut sogar mehrere Hilfsmittel zugebbar, wobei die Zugabemenge jedes der Hilfsmittel in Abhängigkeit erfasster Guteigenschaften einzeln dosiert wird. Bei den mehreren Hilfsmitteln kann sich es beispielsweise um Silierhilfsmittel unterschiedlicher Wirkung handeln, wobei durch die individuelle Dosierung jedes einzelnen der Hilfsmittel eine besonders gut auf die Ernteguteigenschaften abgestimmte Aufbereitung erreicht wird. Demnach können mehrere Hilfsmittel in dosierbarer Menge gleichzeitig zugegeben werden, es kann nur ein Hilfsmittel zugegeben werden oder es kann auch gar kein Hilfsmittel zugegeben werden (falls es die Bedingungen nicht erforderlich machen). Eine gemeinsame Applizierung kann in der Weise erfolgen, dass die mehreren Hilfsmittel vor deren Zugabe zum Erntegut miteinander vermischt werden. Die miteinander vermischten Hilfsmittel bilden dann eine Art "Zugabecocktail", der durch eine im Erntebetrieb laufend veränderbare Zusammensetzung ("Mischung") hoch effektiv auf den Zustand des aktuell geernteten Guts abgestimmt sein kann.

Alternativ oder ergänzend können dem Erntegut Hilfsmittel in unterschiedlicher Form zugebbar sein, wobei die jeweilige Zugabemenge des Hilfsmittels in einer bestimmten Form in Abhängigkeit erfasster Guteigenschaften dosiert wird. So kann es beispielsweise unter bestimmten Erntebedingungen (hohe Feuchte) ausreichend sein, Silierhilfsmittel in (fester) Granulatform dem Erntegut zuzugeben. Da sich unter trockeneren Erntebedingungen das Granulat jedoch nicht im Erntegut auflösen würde, kann vorteilhaft vorgesehen sein, in diesem Fall ein gleiches Silierhilfsmittel oder zumindest eines mit gleicher Wirkung wie das Granulat, nur eben im flüssigen (z.B. in Wasser gelöstem) Zustand, dem Erntegut zuzugeben und die Zugabe des Granulats einzustellen. Jegliche Formen der Zugabe (fest, flüssig, gasförmig, als Aersol) sind denkbar. Für Hilfsmittel mit unterschiedlicher Wirkung können unterschiedliche Formen der Zugabe zweckmäßig oder sogar notwendig sein.

Die Dosierung des zumindest einen Hilfsmittels erfolgt auf Basis empirisch ermittelter Werte (beispielsweise vorliegend als "Kennlinie"), welche für bestimmte Ernteguteigenschaften eine geeignete Dosierung des (oder der) Hilfsmittel vorgeben. Da derartige Werte für jede Erntegutart eine unterschiedliche Kennlinie bilden, erfolgt die Dosierung des zumindest einen Hilfsmittels anhand einer erntegutartspezifischen Kennlinie, wobei zur Auswahl der Kennlinie die Erntegutart entweder sensorisch erfasst oder durch den Bediener der Erntemaschine vorgegeben wird. Eine sensorische Erfassung und anschließende Erkennung der Erntegutart ließe sich ggf. ebenfalls durch optische, insbesondere nahinfrarotspektroskopischen Messverfahren erreichen. Eine Vorgabe durch den Bediener könnte durch manuelle Auswahl der Erntegutart in einem Auswahlmenü einer Bedieneinheit erfolgen.

Die eingangs genannte Aufgabe wird weiterhin gelöst durch eine Erntemaschine gemäß Anspruch 8 zur Durchführung des zuvor beschriebenen Verfahrens. Es handelt sich dabei um einen selbstfahrenden Feldhäcksler, der mit zumindest einem Arbeitsaggregat, das Erntegut in Form eines Erntegutstroms fördert, und mit einer Einrichtung zum Einbringen zumindest eines Hilfsmittels in den Erntegutstrom ausgestattet ist. Die Erntemaschine zeichnet sich erfindungsgemäß aus durch eine dem Gutstrom zugeordnete Sensoranordnung zur Erfassung von Eigenschaften des Ernteguts, Mittel zur Beeinflussung der Einbringmenge des zumindest einen Hilfsmittels, und eine Steuereinheit, die betreibbar ist, anhand von der Sensoranordnung empfangener Informationen die Einbringmenge des zumindest einen Hilfsmittels anzupassen.

Die Sensoranordnung kann unterschiedlich aufgebaut sein, insbesondere kann diese parallel mit unterschiedlichen Messmethoden betreibbar sein, um beispielsweise unterschiedliche Eigenschaften des Ernteguts zu erfassen. Gemäß einer vorteilhaften Weiterbildung der Erfindung umfasst die Sensoranordnung dabei zumindest eine optisch, insbesondere auf Basis der Nahinfrarotspektroskopie arbeitende Messeinrichtung. Zweckmäßigerweise ist in diesem Fall zumindest deren optische Erfassungseinheit in der Nähe des Erntegutstroms angeordnet. Bei einem Feldhäcksler könnte eine optische Erfassung des Ernteguts bevorzugt im Bereich des Auswurfkrümmers stattfinden.

Die Einrichtung zum Einbringen des zumindest einen Hilfsmittels umfasst zweckmäßigerweise zumindest einen Behälter zur Bevorratung einer Substanz sowie zumindest eine mit dem Behälter verbundene Fördereinheit, die betreibbar ist, die in dem zumindest einen Behälter befindliche Substanz durch eine Zuführung zum Erntegutstrom zu fördern. Dabei kann die Fördereinheit eine Pumpe umfassen, die als Verstellpumpe ausgeführt ist oder mit einem Durchflussmengenventil oder dergleichen zusammenwirkt, um eine veränderbare Zugabemenge des zumindest einen Hilfsmittels in das Erntegut leisten zu können. Unterschiedliche Bauweisen einer solchen Fördereinheit sind denkbar.

Gemäß einer vorteilhaften Weiterbildung der Erntemaschine sind an dieser mehrere Behälter zur Bevorratung von zu applizierenden Substanzen vorgesehen. Dabei können beispielsweise die Behälter mit einer gemeinsamen Mischeinheit verbunden sind, die betreibbar ist, die Substanzen in einem von der Steuereinheit vorgegebenen Verhältnis zu mischen. Eine Zugabe gemischter Substanzen ist so möglich, wobei die Mischeinheit eine flexible, unmittelbare Mengenanpassung einzelner Substanzen ermöglicht. Die Mischeinheit ist dazu bevorzugt im Sinne einer Mischbatterie ausgebildet, mit der sich die Zuflussmenge einzelner Substanzen stufenlos einstellen lässt.

Alternativ könnte die Einrichtung zum Einbringen des zumindest einen Hilfsmittels mehrere Behälter zur Bevorratung jeweils einer Substanz umfassen, denen jeweils eine eigene damit verbundene Fördereinheit zugeordnet ist, wobei jede der einem Behälter zugeordneten Fördereinheiten betreibbar ist, die in dem Behälter befindliche Substanz durch eine Zuführung zum Erntegutstrom zu fördern. Die Zuführung kann dabei baulich getrennt erfolgen, um beispielsweise Substanzen an unterschiedlichen Stellen des Erntegutstroms einbringen zu können. Alternativ könnten die durch jeweils eigene Fördereinheiten geförderten Substanzen vor dem Einbringen in den Gutstrom miteinander gemischt werden, indem diese durch eine gemeinsame Zuführung in den Gutstrom eingebracht werden. Eine solche Bauweise hat gegenüber einer anzusteuernden Mischeinheit (Mischbatterie) den Vorzug, dass durch Ansteuerung der jeweiligen Fördereinheiten die Zugabemenge der jeweiligen Substanz direkt beeinflussbar ist. Eine konstruktiv sowie steuerungstechnisch aufwendige Mischeinheit entfällt damit.

Bei dem Hilfsmittel kann es sich ganz allgemein um ein Silierhilfsmittel in Reinform (fest, flüssig, gasförmig) oder in gelöster Form, oder um reines Wasser handeln. Im Behälter bereitgehaltenes Wasser kann entweder - nach dosierter Mischung beispielsweise mit einem in einem weiteren Behälter bereitgehaltenen Silierhilfsmittel - zur Lösung und Dosierung des Wirkstoffs genutzt werden. Das Wasser dient in diesem Fall als Trägermittel und ermöglicht durch dessen flexible Zumischung eine Dosierung des zugegebenen Wirkstoffs. Alternativ oder ergänzend kann Wasser auch ohne Zumischen weiterer Substanzen dem Erntegut zugegeben werden, um als Hilfsmittel beispielsweise den Gutfluss zu verbessern. Dies kann bei der Ernte von zuckerhaltigem Gras von Bedeutung sein, wo durch gezieltes Eindüsen von Wasser die Fördereigenschaften des Ernteguts verbessert werden können. Eine weitere Anwendungsmöglichkeit für die Zugabe von reinem Wasser besteht insbesondere bei Feldhäckslern in der Einbindung der bordeigenen Schleifanlage, indem diese durch das mitgeführte Wasser kühlbar ausgeführt ist, um das Brandrisiko zu verringern bzw. die Messer beim Schleifen zu kühlen.

Dieser Anwendung entsprechend kann gemäß einer vorteilhaften Weiterbildung der Erntemaschine ganz allgemein vorgesehen sein, dass die Einrichtung zum Einbringen eines Hilfsmittels weiterhin betreibbar ist, ein Hilfsmittel einem Arbeits- und/oder Förderaggregat der Erntemaschine zuzuführen. Zweckmäßigerweise ist dazu eine geeignete Zuführung für das Hilfsmittel zu dem Arbeits- und/oder Förderaggregat der Erntemaschine vorgesehen. Beispielsweise könnte über eine Wasserleitung zum Häckselaggregat und/oder zum Einzugsaggregat eine bedarfweise Wasserversorgung erfolgen. Dabei könnte eine örtlich ganz gezielt auf die Schleifeinrichtung des Häckselaggregats gerichtete Wasserzugabe der Kühlung beim Schleifvorgang dienen. Andere Anwendungen sind denkbar, wie beispielsweise die zuvor genannte Befeuchtung von Arbeits- und/oder Förderaggregaten zum Zwecke der Verbesserung der Förderfähigkeit. Vorteil dieser Anwendungen ist unter anderem, dass die vorrangig für die Zugabe zum Erntegut vorgesehene Bereitstellung von Hilfsmittel dabei einem zusätzlichen Zweck dient und somit nur einen geringen Mehraufwand darstellt.

Die Zuführung des Hilfsmittels zu dem Arbeits- und/Förderaggregat kann im einfachen Fall manuell durch den Maschinenbediener betätigt werden, ausgelöst beispielweise durch Öffnen eines Ventils oder durch Einschalten einer elektrischen Förderpumpe für das Hilfsmittel. Gemäß einer weiterhin vorteilhaften Weiterbildung der Erfindung kann vorgesehen sein, dass die Zuführung des Hilfsmittels zu dem Arbeitsaggregat ereignisgekoppelt erfolgt. Demnach könnte beispielsweise die beschriebene Kühlung der Schleifeinrichtung an das Ereignis "Durchführung des Schleifvorgangs" gekoppelt sein, demnach also automatisiert bei jedem Schleifvorgang ausgelöst werden. Der Maschinenbediener wäre hierdurch entlastet und es würde stets sichergestellt, dass Brandrisiken minimiert werden.

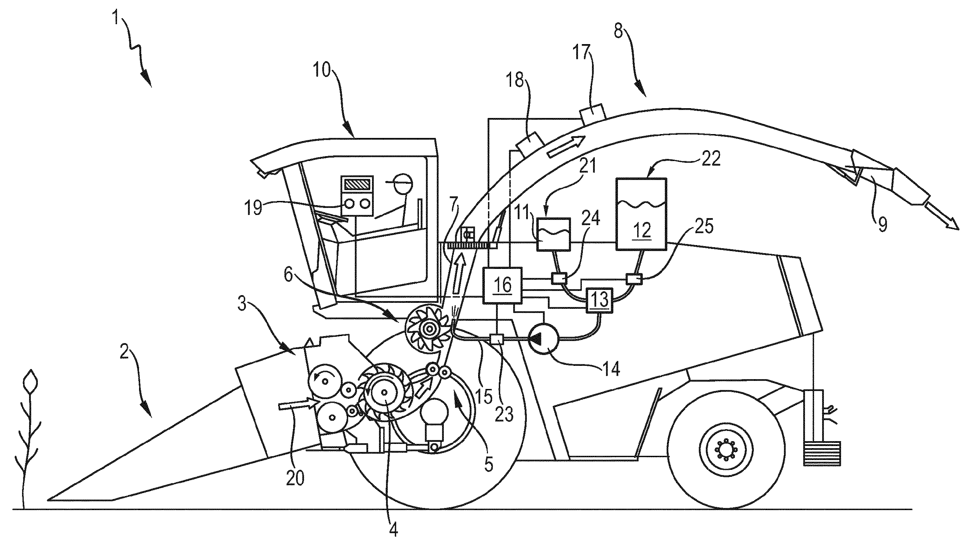

Die Erfindung wird im Folgenden unter Hinweis auf die beigefügte Figur anhand eines Ausführungsbeispiels näher erläutert. Daraus ergeben sich auch weitere Einzelheiten und Vorteile der Erfindung, die in der Figur nicht gezeigt sind.

Die einzige Figur zeigt eine:
landwirtschaftliche Erntemaschine in Form eines selbstfahrenden Feldhäckslers
in schematischer Seitenansicht.

Die einzige Fig. zeigt beispielhaft eine erfindungsgemäße landwirtschaftliche Erntemaschine in Form eines selbstfahrenden Feldhäckslers 1. Der Feldhäcksler 1 eignet sich weiterhin zur Durchführung des erfindungsgemäßen Verfahrens.

Der in der Fig. gezeigte Feldhäcksler 1 ist zur Fahrt über ein mit einem Pflanzenbestand (angedeutet durch eine nicht näher bezeichnete Pflanze) bewachsenen Feld mit Vorder- und Hinterrädern ausgestattet und wird über einen Motor angetrieben. Auf für sich bekannte Weise schneidet der Feldhäcksler 1 bei der Erntefahrt mittels eines frontseitig an den Maschinenrahmen angebauten Erntevorsatzes 2 Pflanzenmaterial vom Feld ab und führt das so gewonnene Erntegut 20 (Förderweg durch die Maschine angedeutet durch Pfeile) einem mit mehreren Vorpresswalzen ausgestatteten Einzugsaggregat 3 zu. Nach dortiger Vorpressung gelangt das Erntegut 20 zur Häckseltrommel 4, die das Erntegut 20 unter Zusammenwirkung mit einer feststehenden Gegenschneide (nicht bezeichnet) zerkleinert. Durch einen hinter der Häckseltrommel 4 aufsteigenden Förderschacht 7 tritt das gehäckselte Erntegut 20 nach Bearbeitung durch eine Konditioniereinrichtung 5 (optional) und zusätzlicher Beschleunigung durch einen Nachbeschleuniger 6 in eine bogenförmig gekrümmte Überladeeinrichtung 8 ein, um durch deren maschinenabgewandte Auswurfklappe 9 zur Beladung eines (nicht gezeigten) Sammelbehälters aus dem Feldhäcksler 1 ausgeworfen zu werden.

Das ausgeworfene Erntegut wird in der Praxis oftmals einem Silierprozess unterzogen, um es für eine spätere Verfütterung an Nutztiere zu konservieren und/oder allgemein zu veredeln. Zum Auslösen bzw. zur effektiven Aufrechterhaltung des Silierprozesses und damit zum Erzielen eines guten Silierergebnisses sind bestimmte Eigenschaften des Ernteguts erforderlich, welche gewünschte biologische bzw. chemische Vorgänge im Erntegut begünstigen. Da diese Eigenschaften nicht immer natürlich vorliegen, verfügt der erfindungsgemäße Feldhäcksler 1 über eine nachfolgend beschriebene Anlage zum Einbringen zumindest eines Hilfsmittels, das den Silierprozess und damit die Qualität des Ernteguts 20 begünstigt.

Dazu sind an Bord des Feldhäckslers 1 zwei Behälter, ein erster Vorratsbehälter 21 und ein zweiter Vorratsbehälter 22, untergebracht. Der erste Vorratsbehälter 21 ist mit einem flüssigen Silierhilfsmittel 11 gefüllt, das beispielsweise Milchsäurebakterien enthält, und ist vorteilhaft thermisch isoliert, um Temperaturerhöhungen des Silierhilfsmittels 11 und damit ein Absterben der Milchsäurebakterien zu verhindern. Der zweite Vorratsbehälter 22 ist mit Wasser 12 gefüllt. Behälterunterseitig sind jeweils Ablauföffnungen vorgesehen, um die Vorratsbehälter 21, 22 jeweils mittels einer Leitung mit einer gemeinsamen Mischeinheit 13 zu verbinden. An jeder der Leitungen zwischen erstem Vorratsbehälter 21 und Mischeinheit 13 sowie zwischen zweitem Vorratsbehälter 22 und Mischeinheit 13 ist ein Durchflussmesser 24 bzw. 25 vorgesehen, der den jeweiligen Durchfluss durch die Leitung und damit den Abfluss aus dem ersten Vorratsbehälter 21 bzw. zweiten Vorratsbehälter 22 erfasst. Die Durchflussmesser 24, 25 übermitteln entsprechende Durchflussmengensignale an eine zentrale Steuereinheit 16.

Die Mischeinheit 13 ist ebenfalls mit der zentralen Steuereinheit 16 in signalverbunden, um von der Steuereinheit 16 angesteuert zu werden. Auf Basis empfangener Steuersignale ist die Mischeinheit 13 in der Lage, die Ablaufmengen (=Durchflussmengen) des Silierhilfsmittels 11 und des Wassers 12 durch die jeweiligen Leitungen zur Mischeinheit 13 in einem Bereich von 0% bis 100% im Sinne einer Mischbatterie beliebig zu drosseln. Auf diese Weise kann die Mischeinheit 13 die beiden Flüssigkeiten 11, 12 in beliebig einstellbarem Verhältnis mischen. Im einen Extremfall tritt reines Silierhilfsmittel 11, im anderen Extremfalls tritt reines Wasser 12 aus einem abgabeseitigen Auslass der Mischeinheit 13 aus. Dazwischen sind beliebige Mischverhältnisse einstellbar. Auch eine vollständige Sperrung der Mischeinheit 13 ist möglich, falls aufgrund der Erntebedingungen keines der Hilfsmittel erforderlich ist.

Eine Förderpumpe 14 mit veränderlicher Förderleistung ist über eine Leitung mit dem abgabeseitigen Auslass der Mischeinheit 13 verbunden, um das Flüssigkeitsgemisch gemäß an der Pumpe 14 angezeigter Pfeilrichtung zunächst durch einen weiteren Durchflussmesser 23 (für die Gesamtzugabemenge) und schließlich durch einen im Förderschacht 7 endenden, sich in Stromrichtung des Ernteguts 20 öffnenden Injektor 15 zu fördern, wodurch das Gemisch in fein verspritzter Form auf das vorbeiströmende Erntegut 20 appliziert wird.

Auch die Förderpumpe 14 ist über die Steuereinheit 16 ansteuerbar, so dass sich die Gesamtzugabemenge des Flüssigkeitsgemischs, das durch den Injektor 15 dem Erntegut 20 zugeführt wird, durch Veränderung der Förderleistung steuern lässt. Der Durchflussmesser 23, dessen Durchflussmengensignal an die Steuereinheit 16 übermittelt wird, dient als Rückkopplung für die Regelung der Gesamtmenge.

Zur selbsttätigen Einstellung einer effektiven Dosierung von zugegebenen Hilfsmitteln verfügt der Feldhäcksler 1 über eine Sensorik zur Erfassung von Eigenschaften des Ernteguts 20. Diese umfasst im gezeigten Beispiel zwei Sensoren 17, 18, die an der Rückwand der Überladeeinrichtung 8 angeordnet sind.

Bei dem Sensor 17 handelt es sich um einen optischen Sensor, der dazu geeignet ist, vorbeiströmendes Erntegut 20 derart optisch zu erfassen, dass anhand einer Analyse der erzeugten optischen Signale Eigenschaften des Ernteguts 20 ermittelt werden können. Ganz allgemein kann es sich hierbei um Eigenschaften wie die Feuchte bzw. Trockenmasse, den physikalischen Zustand (u.a. Schnittlänge, Struktur), die inhaltliche Zusammensetzung etc. handeln. Insbesondere ein auf Basis der Nahinfrarotspektroskopie arbeitender optischer Sensor bietet auf technisch geeignete Weise die Möglichkeit, Inhaltsstoffe oder Feuchte des Ernteguts 20 zuverlässig zu bestimmen, was für eine besonders differenzierte Dosierung von Hilfsmitteln von Vorteil ist. Der Sensor 17 ist dazu mit der Steuereinheit 16 signalverbunden, so dass die Steuereinheit 16 auf aktuell vorliegende Eigenschaften des Ernteguts 20 durch entsprechende Dosierung des bzw. der Hilfsmittel 11, 12 schnellstmöglich reagieren kann.

Bei dem Sensor 18 (optional) handelt es sich um eine zusätzliche Messeinrichtung in Form eines Feuchtesensors. Dieser kann beispielsweise gemäß dem Prinzip eines elektrischen Leitwertsensors arbeiten. Zusätzlich kann in diesen ein Temperatursensor integriert sein, um durch kombinierte Messwertanalyse (Leitfähigkeit und Temperatur des Ernteguts) die Genauigkeit der Feuchtemessung zu erhöhen. Auch der Sensor 18 ist mit der Steuereinheit 16 signalverbunden, so dass die Steuereinheit 16 auf ermittelte Feuchtewerte des Ernteguts 20 reagieren kann.

Der Feldhäcksler 1 verfügt weiterhin über eine Fahrerkabine 10, in der ein mit der Steuereinheit 16 in Kommunikationsverbindung stehendes Bedienterminal 19 für einen Maschinenbediener zugänglich angeordnet ist. Über das Bedienterminal 19 lassen sich sämtliche Einstellungen für die Siliermittelzugabe vornehmen. Insbesondere können gewünschte Applikationsmengen manuell eingestellt werden und/oder können Regelgrenzen für eine automatische Dosierung gesetzt werden. Vorteilhaft kann der Bediener dabei zwischen unterschiedlichen Erntegutarten auswählen, wobei mit der Auswahl einer Erntegutart die Hilfsmitteldosierung anhand einer für das Erntegut spezifischen in einer Datenbank hinterlegten Kennlinie erfolgt. Alternativ könnte in einem Vollautomatikmodus die Erntegutart beispielsweise mittels des optischen Sensors 17 selbständig erkannt werden, wodurch eine manuelle Auswahl entfiele.

Das Bedienterminal 19 verfügt weiterhin über eine Anzeige für sämtliche mit der Hilfsmittelzugabe in Verbindung stehenden Informationen. Im Rahmen des Auftragsmanagements des Feldhäckslers 1 könnten relevante Daten, insbesondere die Zugabemengen an Hilfsmitteln, dokumentiert werden. Auf weiterhin vorteilhafte Weise könnte die Dokumentation ortsbezogen erfolgen, wozu beispielsweise eine Ortung über ein geeignetes Ortungssystem des Feldhäckslers (GPS, Funk etc.) genutzt werden kann. Umgekehrt könnten auch für die Hilfsmitteldosierung - neben den sensorisch erfassten Ernteguteigenschaften - Ortungsinformationen herangezogen werden, um ein georeferenziertes Zugeben der Hilfsmittel durchzuführen. Auf diese Weise könnten in der Praxis beispielsweise ganz gezielt nur auf Teilflächen eines Feldes Hilfsmittel zugegeben werden.

Die Zugabe von Hilfsmittel(n) kann auch auf andere Weise erfolgen, als anhand des Feldhäckslers 1 beispielhaft beschrieben ist. Insbesondere sind zahlreiche abweichende Anordnungen und Gestaltungen der Vorratsbehälter sowie der Förder- und Dosierungselemente möglich. Beispielsweise können statt zwei Vorratsbehältern beliebig viele Vorratsbehälter vorgesehen sein, um eine hohe Bandbreite nutzbarer Hilfsmittel gleichzeitig oder selektiv einzusetzen. So können neben (oder alternativ zu) Wasser beispielsweise unterschiedliche Säuren und/oder zuckerhaltige Flüssigkeiten (z.B. Melasse) als Hilfszugabemittel bereitgehalten werden. Daneben können die Vorratsbehälter auch für Hilfsmittel in anderer als flüssiger Form - z.B. in Festform (Granulat) oder im Gaszustand - geeignet sein. Eine dem Hilfsmittel angepasste Zuführ-, Förder- und Dosiertechnik ist dann erforderlich.

Allgemein bietet die separate Bevorratung unterschiedlicher Hilfsmittel den Vorteil, dass deren Zugabemenge im Verhältnis zu anderen Hilfsmittel(n) erst unmittelbar vor der Zugabe zum Erntegut festgelegt wird. Damit besteht eine hohe Flexibilität während des Ernteeinsatzes, so dass kurzfristig auf veränderte Erntegutbedingungen reagiert werden kann. Weiterhin ist ein separates Nachfüllen verbrauchter Mittel uneingeschränkt möglich.

Bei der Ernte von Gras könnten vorteilhafte Dosierungsmaßnahmen beispielsweise in Folgendem bestehen:

| | |
|---|---|
| absinkender Zuckergehalt: | Erhöhung der Zugabe von Melasse, |
| Proteingehalt steigt über Grenzwert: | Start der Zugabe von Melasse, |
| Rohascheanteil steigt über Grenzwert: | Start der Zugabe eines Mittels gegen Futterverschmutzung, |
| Zuckergehalt sehr gering: | Zugabe von Säuren. |

Bei der Ernte von Mais könnten vorteilhafte Dosierungsmaßnahmen beispielsweise in Folgendem bestehen:

| | |
|---|---|
| Anstieg des Rohfasergehalts: | Anwendung von enzymatischem Siliermittel, |
| Rohascheanteil steigt über Grenzwert: | Start der Zugabe eines Mittels gegen Futterverschmutzung. |

Ganz allgemein kann die Einbringung des jeweiligen Hilfsmittels auf unterschiedliche Weise, z.B. an unterschiedlicher Stelle der Erntemaschine oder in unterschiedlicher Form (fest, flüssig, gasförmig) erfolgen. Während im gezeigten Ausführungsbeispiel Wasser und ein Silierhilfsmittel im bereits zuvor vermischten Zustand, also als Gemisch in den Gutstrom eingebracht werden, könnten diese auch über jeweils eigene Leitungswege und an unterschiedlichen Stellen des Gutstroms zugegeben werden.

Weiterhin könnten gerade für das Hilfsmittel Wasser mehrere Zugabemöglichkeiten vorgesehen sein, um beispielsweise ganz gezielt im Bereich des Einzugsaggregats 3 oder am Nachbeschleuniger 6 Wasser (in Reinform) dem Erntegut 20 zuzuführen. Auf diese Weise könnte z.B. bei der Ernte von sehr zuckerhaltigem Gras der Gutfluss verbessert werden.

Daneben könnte das in einem der Vorratsbehälter vorhandene Wasser zusätzlich dazu genutzt werden, eine für die Messer der Häckseltrommel vorhandene Schleifanlage durch Aufspritzen zu kühlen, um das Brandrisiko zu reduzieren und/oder ein Ausglühen der Messer zu unterbinden. Eine entsprechende zusätzliche Zuführung für das Wasser (in der Fig. nicht dargestellt) wäre in diesem Fall erforderlich.

### Bezugszeichenliste

- 1: Feldhäcksler
- 2: Erntevorsatz
- 3: Einzugsaggregat
- 4: Häckseltrommel
- 5: Konditioniereinrichtung
- 6: Nachbeschleuniger
- 7: Förderschacht
- 8: Überladeeinrichtung
- 9: Auswurfklappe
- 10: Fahrerkabine
- 11: Silierhilfsmittel
- 12: Wasser
- 13: Mischeinheit
- 14: Förderpumpe
- 15: Injektor
- 16: Steuereinheit
- 17: optischer Sensor
- 18: Feuchtesensor
- 19: Bedienterminal
- 20: Erntegut
- 21: erster Vorratsbehälter
- 22: zweiter Vorratsbehälter
- 23: Durchflussmesser
- 24: Durchflussmesser
- 25: Durchflussmesser

## Patentansprüche

1. Verfahren zur Aufbereitung von landwirtschaftlichem Erntegut (20), das in Form eines Gutstroms durch zumindest ein Arbeitsaggregat (3, 4, 5, 6) eines selbstfahrenden Feldhäckslers (1) gefördert wird, wobei dem Erntegutstrom zumindest ein dessen Qualität begünstigendes Hilfsmittel (11, 12) zugebbar ist und wobei eine oder mehrere Eigenschaften des Ernteguts (20) sensorisch erfasst werden, um die Zugabemenge des zumindest einen Hilfsmittels (11, 12) in Abhängigkeit erfasster Gutaigenschaften zu dosieren,
**dadurch gekennzeichnet, dass** die Dosierung des zumindest einen Hilfsmittels (11,12) anhand einer erntegutartspezifischen Kennlinie erfolgt, wobei zur Auswahl der Kennlinie die Erntegutart entweder sensorisch erfasst oder durch den Bediener des selbstfahrenden Feldhäckslers (1) vorgegeben wird und die erntegutartspezifische Kennlinie zumindest eine oder mehrere der Ernteguteigenschaften (20) Zuckergehalt, Proteingehalt, Rohaschenantell, Struktur oder Schnittlänge umfaßt.

2. Verfahren nach Anspruch 1, **dadurch gekennzeichnet, dass** einzelne Inhaltsbestandteile des Ernteguts (20) insbesondere auf Basis einer optischen, bevorzugt einer nahinfrarotspektroskopischen Analyse ermittelt werden.

3. Verfahren nach Anspruch 1 oder 2, **dadurch gekennzeichnet, dass** die Feuchtigkeit und/oder die Temperatur des Ernteguts (20) gemessen wird.

4. Verfahren nach einem der Ansprüche 1 bis 3, dadurch gekenntzeichnet, dass die Dosierung des zumindest einen Hilfsmittels (11, 12) zusätzlich in Abhängigkeit der Zeit oder des Erntegutdurchsatzes durch den seibstfahrenden Feldhäcksler (1) erfolgt,

5. Verfahren nach einem der Ansprüche 1 bis 4, **dadurch gekennzeichnet, dass** dem Erntegut (20) mehrere Hilfsmittel (11,12) zugebbar sind, wobei die Zugabemenge jedes der Hilfsmittel (11, 12) in Abhänglgkelt erfasster Guteigenschaften einzeln dosiert wird.

6. Verfahren nach Anspruch 5, **dadurch gekennzeichnet, dass** die mehreren Hilfsmittel (11, 12) vor deren Zugabe zum Erntegut (20) miteinander vermischt werden.

7. Verfahren nach einem der Ansprüche 1 bis 6, **dadurch gekennzeichnet, dass** dem Erntegut (20) Hilfsmittel in unterschiedlicher Form zugebbar sind, wobei die Jeweilige Zugabemenge des Hilfsmittels in einer bestimmten Form in Abhängigkeit erfasster Guteigenschaften dosiert wird.

8. Selbstfahrender Feldhäcksler (1) zur Durchführung des Verfahrens gemäß einem der Ansprüche 1 bis 7, mit zumindest einem Arbeitsaggregat (3, 4, 5, 6), das Erntegut (20) In Form eines Erntegutstroms fördert, und mit einer Einrichtung (13, 14, 15, 21, 22) zum Einbringen zumindest eines Hilfsmittels (11,12) in den Erntegutstrom, einer dem Gutstrom zugeordneten Sensoranordnung (17, 18) zur Erfassung von Eigenschaften des Ernteguts (20), Mitteln (13, 14) zur Beeinflussung der Einbringmenge des zumindest einen Hilfsmittels (11, 12), und einer Steuereinheit (16), die betreibbar ist, anhand von der Sensoranordnung (17, 18) empfangener Informationen die Einbringmenge des zumindest einen Hilfsmittels (11, 12) anzupassen, **dadurch gekennzeichnet, dass**
die Dosierung des zumindest einen Hilfsmittels (11, 12) anhand einer erntegutartspezifischen Kennlinie erfolgt, wobei zur Auswahl der Kennlinie die Erntegutart entweder sensorisch erfasst oder durch den Bediener der Erntemaschine (1) vorgegeben wird und die erntegutartspezifische Kennlinie zumindest eine oder mehrere der Ernteguteigenschaften (20) Zuckergehalt, Proteingehalt, Rohaschenanteil, Struktur oder Schnittlange umfaßt.

9. Selbstfahrender Feldhäcksler (1) nach Anspruch 8, dadurch gekennzelchnet, dass die Sensoranordnung eine optisch, insbesondere auf Basis der Nahinfrarotspektroskopie arbeitende Messeinrichtung (17) umfasst.

10. Selbstfahrender Feldhäckslers (1) nach Anspruch 8 oder 9, **dadurch gekennzeichnet, dass** die Einrichtung (13,14,15, 21, 22) zum Einbringen des zumindest einen Hilfsmittels (11, 12) zumindest einen Behälter (21, 22) zur Bevorratung einer Substanz (11, 12) sowie zumindest eine mit dem Behälter (21, 22) verbundene Fördereinheit (14) umfasst, die betreibbar ist, die In dem zumindest einen Behälter (21, 22) befindliche Substanz (11, 12) durch eine Zuführung (15) zum Erntegutstrom und/oder sonstigen Einsatzort zu fördern.

11. Selbstfahrender Feldhäcksler (1) nach Anspruch 10, **dadurch gekennzeichnet, dass** die Einrichtung (13, 14, 15, 21, 22) mehrere Behälter (21, 22) zur Bevorratung jeweils einer Substanz (11, 12) umfasst, wobei die Behälter (21, 22) mit einer gemeinsamen Mischeinheit (13) verbunden sind, die betreibbar ist, die Substanzen (11, 12) In einem von der Steuereinheit (16) vorgegebenen Verhältnis zu mischen.

12. Selbstfahrender Feldhäcksler (1) nach einem der Ansprüche 8 bis 11, **dadurch gekennzeichnet, dass** die Einrichtung zum Einbringen des zumindest einen Hilfsmittels (11, 12) mehrere Behälter zur Bevorratung jeweils einer Substanz (11, 12) umfasst, denen jeweils eine eigene damit verbundene Fördereinheit zugeordnet ist, wobei jede der einem Behälter zugeordneten Fördereinheiten betreibbar ist, die in dem Behälter befindliche Substanz durch eine Zuführung zum Erntegutstrom zu fördern.

13. Selbstfahrender Feldhäcksler (1) nach einem der Ansprüche 6 bis 12, **dadurch gekennzeichnet, dass** die Einrichtung zum Einbringen eines Hilfsmittels (11, 12) weiterhin betreibbar Ist, ein Hilfsmittel (12) einem Arbeits- und/oder Förderaggregat (2, 3, 4, 6, 6, 7, 8, 9) des Feldhäckslers (1) zuzuführen.

14. Selbstfahrender Feldhäcksler (1) nach einem der Ansprüche 8 bis 13, **dadurch gekennzeichnet, dass** die Zuführung des Hilfsmittels (12) zu dem Arbeitsaggregat (2, 3, 4, 5, 6, 7, 8, 9) ereignisgekoppelt erfolgt.

## Claims

1. A method of treating agricultural crop material (20) which is conveyed in the form of a flow of material through at least one working unit (3, 4, 5, 6) of a self-propelled forage harvester (1), wherein at least one auxiliary agent (11, 12) for improving the quality of the crop material flow can be added thereto and wherein one or more properties of the crop material (20) are detected by sensor means to meter the added amount of the at least one auxiliary agent (11, 12) in dependence of detected material properties,
**characterised in that** metering of the at least one auxiliary agent (11, 12) is effected on the basis of a crop material type-specific characteristic, wherein to select the characteristic the type of crop material is either detected by sensor means or is predetermined by the operator of the self-propelled forage harvester (1) and the crop material type-specific characteristic includes at least one or more of the crop material properties (20) consisting of sugar content, protein content, crude ash proportion, structure or cut length.

2. A method according to claim 1 **characterised in that** individual constituent components of the crop material (20) are ascertained on the basis of an optical, preferably a near infra-red spectroscopic analysis.

3. A method according to claim 1 or claim 2 **characterised in that** the moisture content and/or the temperature of the crop material (20) is measured.

4. A method according to one of claims 1 to 3 **characterised in that** metering of the at least one auxiliary agent (11, 12) is additionally effected in dependence on time or the crop material through-put through the self-propelled forage harvester (1).

5. A method according to one of claims 1 to 4 **characterised in that** a plurality of auxiliary agents (11, 12) can be added to the crop material (20), wherein the added amount of each of the auxiliary agents (11, 12) is individually metered in dependence on detected material properties.

6. A method according to claim 5 **characterised in that** the plurality of auxiliary agents (11, 12) are mixed together before the addition thereof to the crop material (20).

7. A method according to one of claims 1 to 6 **characterised in that** auxiliary agents in differing form can be added to the crop material (20), wherein the respective added amount of the auxiliary agent in a given form is metered in dependence on detected material properties.

8. A self-propelled forage harvester (1) for carrying out the method according to one of claims 1 to 7 comprising at least one working unit (3, 4, 5, 6) which conveys crop material (20) in the form of a crop material flow, and a device (13, 14, 15, 21, 22) for introducing at least one auxiliary agent (11, 12) into the crop material flow, a sensor arrangement (17, 18) associated with the material flow for detecting properties of the crop material (20), means (13, 14) for introducing the amount introduced of the at least one auxiliary agent (11, 12), and a control unit (16) operable on the basis of items of information received from the sensor arrangement (17, 18) to adapt the introduced amount of the at least one auxiliary agent (11, 12),
**characterised in that** metering of the at least one auxiliary agent (11, 12) is effected on the basis of a crop material type-specific characteristic, wherein to select the characteristic the type of crop material is either detected by sensor means or is predetermined by the operator of the harvesting machine (1) and the crop material type-specific characteristic includes at least one or more of the crop material properties (20) consisting of sugar content, protein content, crude ash proportion, structure or cut length.

9. A self-propelled forage harvester (1) according to claim 8 **characterised in that** the sensor arrangement includes a measuring device (17) which operates optically, in particular on the basis of near infra-red spectroscopy.

10. A self-propelled forage harvester (1) according to claim 8 or claim 9 **characterised in that** the device (13, 14, 15, 21, 22) for introducing the at least one auxiliary agent (11, 12) includes at least one container (21, 22) for storing a substance (11, ,12) and at least one conveyor unit (14) which is connected to the container (21, 22) and which is operable to convey the substance (11, 12) in the at least one container (21, 22) through a feed (15) to the crop material flow and/or other place of use.

11. A self-propelled forage harvester (1) according to claim 10 **characterised in that** the device (13, 14, 15, 21, 22) includes a plurality of containers (21, 22) for storing a respective substance (11, 12), wherein the containers (21, 22) are connected to a common mixing unit (13) operable to mix the substances (11, 12) in a ratio predetermined by the control unit (16).

12. A self-propelled forage harvester (1) according to one of claims 8 to 11 **characterised in that** the device for introducing the at least one auxiliary agent (11, 12) includes a plurality of containers for storing a respective substance (11, 12), with which there is associated a respective specific conveyor unit connected thereto, wherein each of the conveyor units associated with a container is operable to convey the substance in the container through a feed to the crop material flow.

13. A self-propelled forage harvester (1) according to one of claims 6 to 12 **characterised in that** the device for introducing an auxiliary agent (11, 12) is further operable to feed an auxiliary agent (12) to a working and/or conveyor unit (2, 3, 4, 5, 6, 7, 8, 9) of the forage harvester (1).

14. A self-propelled forage harvester (1) according to one of claims 8 to 13 **characterised in that** the feed of the auxiliary agent (12) to the working unit (2, 3, 4, 5, 6, 7, 8, 9) is effected in event-coupled relationship.

## Revendications

1. Procédé de traitement d'un produit de récolte agricole (20) qui est transporté sous la forme d'un flux de produit par au moins un organe de travail (3, 4, 5, 6) d'une ensileuse automotrice (1), au moins un produit auxiliaire (11, 12) favorisant sa qualité pouvant être ajouté au flux de produit de récolte et une ou plusieurs propriétés du produit de récolte (20) étant détectées au moyen de capteurs pour doser la quantité ajoutée dudit au moins un produit auxiliaire (11, 12) en fonction des propriétés détectées du produit de récolte, **caractérisé en ce que** le dosage dudit au moins un produit auxiliaire (11, 12) est effectué à l'aide d'une courbe caractéristique spécifique à la nature du produit de récolte, la nature du produit de récolte étant soit détectée au moyen de capteurs, soit spécifiée par l'opérateur de l'ensileuse automotrice (1) pour la sélection de la courbe caractéristique, et la courbe caractéristique spécifique à la nature du produit de récolte comprenant au moins une ou plusieurs des propriétés du produit de récolte (20) suivantes : teneur en sucre, teneur en protéines, taux de cendres brutes, structure ou longueur de coupe.

2. Procédé selon la revendication 1, **caractérisé en ce que** certains composants du contenu du produit de récolte (20) sont déterminés en particulier sur la base d'une analyse optique, de préférence d'une spectroscopie proche infrarouge.

3. Procédé selon la revendication 1 ou 2, **caractérisé en ce que** l'humidité et/ou la température du produit de récolte (20) sont mesurées.

4. Procédé selon l'une des revendications 1 à 3, **caractérisé en ce que** le dosage dudit au moins un produit auxiliaire (11, 12) est effectué, en plus, en fonction du temps ou du débit de produit de récolte à travers l'ensileuse automotrice (1).

5. Procédé selon l'une des revendications 1 à 4, **caractérisé en ce que** plusieurs produits auxiliaires (11, 12) peuvent être ajoutés au produit de récolte (20), la quantité ajoutée de chacun des produits auxiliaires (11, 12) étant dosée individuellement en fonction de propriétés détectées du produit de récolte.

6. Procédé selon la revendication 5, **caractérisé en ce que** lesdits plusieurs produits auxiliaires (11, 12) sont mélangés ensemble avant leur ajout au produit de récolte (20).

7. Procédé selon l'une des revendications 1 à 6, **caractérisé en ce que** des produits auxiliaires peuvent être ajoutés au produit de récolte (20) sous différentes formes, la quantité ajoutée respective du produit auxiliaire sous une certaine forme étant dosée en fonction de propriétés détectées du produit de récolte.

8. Ensileuse automotrice (1) pour mettre en oeuvre le procédé selon l'une des revendications 1 à 7, dotée d'au moins un organe de travail (3, 4, 5, 6) qui transporte un produit de récolte (20) sous la forme d'un flux de produit de récolte, et dotée d'un dispositif (13, 14, 15, 21, 22) pour introduire au moins un produit auxiliaire (11, 12) dans le flux de produit de récolte, d'un ensemble de capteurs (17, 18) associé au flux de produit de récolte pour détecter des propriétés du produit de récolte (20), de moyens (13, 14) pour influencer la quantité introduite dudit au moins un produit auxiliaire (11, 12), et d'une unité de commande (16) qui peut être utilisée pour adapter la quantité introduite dudit au moins un produit auxiliaire (11, 12) à l'aide d'informations reçues de l'ensemble de capteurs (17, 18), **caractérisée en ce que** le dosage dudit au moins un produit auxiliaire (11, 12) est effectué à l'aide d'une courbe caractéristique spécifique à la nature du produit de récolte, la nature du produit de récolte étant soit détectée au moyen de capteurs, soit spécifiée par l'opérateur de la machine de récolte (1) pour la sélection de la courbe caractéristique, et la courbe caractéristique spécifique à la nature du produit de récolte comprenant au moins une ou plusieurs des propriétés du produit de récolte (20) suivantes : teneur en sucre, teneur en protéines, taux de cendres brutes, structure ou longueur de coupe.

9. Ensileuse automotrice (1) selon la revendication 8, **caractérisée en ce que** l'ensemble de capteurs comprend un dispositif de mesure (17) fonctionnant optiquement, en particulier sur la base de la spectroscopie proche infrarouge.

10. Ensileuse automotrice (1) selon la revendication 8 ou 9, **caractérisée en ce que** le dispositif (13, 14, 15, 21, 22) servant à introduire ledit au moins un produit auxiliaire (11, 12) comprend au moins un réservoir (21, 22) servant à stocker une substance (11, 12) ainsi qu'au moins une unité de transport (14) qui est reliée au réservoir (21, 22) et qui peut être utilisée pour transporter la substance (11, 12) se trouvant dans ledit au moins un réservoir (21, 22) vers le flux de produit de récolte et/ou vers un autre lieu d'utilisation à travers un moyen d'amenée (15).

11. Ensileuse automotrice (1) selon la revendication 10, **caractérisée en ce que** le dispositif (13, 14, 15, 21, 22) comprend plusieurs réservoirs (21, 22) servant à stocker chacun une substance (11, 12), les réservoirs (21, 22) étant reliés à une unité de mélange (13) commune qui peut être utilisée pour mélanger les substances (11, 12) dans un rapport spécifié par l'unité de commande (16).

12. Ensileuse automotrice (1) selon l'une des revendications 8 à 11, **caractérisée en ce que** le dispositif servant à introduire ledit au moins un produit auxiliaire (11, 12) comprend plusieurs réservoirs qui servent à stocker chacun une substance (11, 12) et à chacun desquels est associée une unité de transport propre qui y est reliée, chacune des unités de transport associées à un réservoir pouvant être utilisée pour transporter la substance se trouvant dans le réservoir vers le flux de produit de récolte à travers un moyen d'amenée.

13. Ensileuse automotrice (1) selon l'une des revendications 8 à 12, **caractérisée en ce que** le dispositif servant à introduire un produit auxiliaire (11, 12) peut, en outre, être utilisé pour amener un produit auxiliaire (12) à un organe de travail et/ou de transport (2, 3, 4, 5, 6, 7, 8, 9) de l'ensileuse (1).

14. Ensileuse automotrice (1) selon l'une des revendications 8 à 13, **caractérisée en ce que** l'amenée du produit auxiliaire (12) à l'organe de travail (2, 3, 4, 5, 6, 7, 8, 9) s'effectue de manière liée à un événement.
